# FASCICULE DE BREVET EUROPEEN

(11) **EP 2 940 359 B1**
(45) Date de publication et mention de la délivrance du brevet: **20.07.2016**
(21) Numéro de dépôt: 15305648.6
(22) Date de dépôt: 28.04.2015
(51) Int. Cl.: F16L 1/23

(54) **DISPOSITIF DU TYPE TENSIONNEUR POUR LE SERRAGE ET L'AVANCEMENT CONTRÔLÉS D'UN ORGANE ALLONGÉ**
VORRICHTUNG VOM TYP SPANNVORRICHTUNG ZUM KONTROLLIERTEN EINSPANNEN UND VORSCHIEBEN EINES LÄNGLICHEN ORGANS
DEVICE OF THE TENSIONER TYPE FOR THE CONTROLLED CLAMPING AND MOVING OF AN ELONGATED ELEMENT

(30) Priorité: 02.05.2014 FR 1454013
(43) Date de publication de la demande: 04.11.2015
(73) Titulaire: REEL, 69450 Saint-Cyr-au-Mont-d'Or (FR)
(72) Inventeur: Konate, Karamoko, 17220 SAINT-ROGATIEN (FR); Huillery, Marc, 17000 LA ROCHELLE (FR)
(74) Mandataire: Coralis Harle

(56) Documents cités:
- US-A1- 2011 182 671
- US-A1- 2011 188 941

## Description

### DOMAINE TECHNIQUE AUQUEL SE RAPPORTE L'INVENTION

La présente invention concerne un dispositif du type tensionneur pour le serrage et l'avancement contrôlés d'un organe allongé, ce dispositif tensionneur étant destiné à équiper notamment une installation pour la dépose de câbles ou de pipelines le long d'une étendue d'eau.

### ARRIERE-PLAN TECHNOLOGIQUE

Certaines installations sont conçues pour permettre la dépose de corps allongés, notamment de câbles ou de pipelines, le long des étendues d'eau.

On rencontre principalement ces installations sur des structures flottantes, telles que des navires ou des plateformes off-shore, pour une dépose le long des fonds océaniques.

De telles installations de dépose comprennent généralement une tour sur laquelle est rapporté au moins un dispositif de pose de type tensionneur.

Les dispositifs de pose appelés « tensionneurs » assurent une prise en charge par serrage d'un tronçon du corps allongé, et l'avancement piloté de ce dernier, pour permettre sa dépose d'une manière contrôlée sur la surface de réception choisie.

Plus précisément, un premier rôle du tensionneur est de constamment serrer le câble ou le pipeline d'une manière efficace, tenant compte du fait que le poids de la partie du corps allongé qui est transférée hors de la structure flottante augmente de manière significative au fur et à mesure de la dépose.

Le second rôle du tensionneur est de manoeuvrer le corps allongé pour assurer son déplacement longitudinal, d'une manière contrôlée. La vitesse de dépose dépend notamment du temps nécessaire pour l'assemblage des portions de câbles ou de pipelines.

Pour cela, les tensionneurs comprennent classiquement un châssis annulaire qui définit un passage de circulation pour le corps allongé et qui porte des caissons de guidage agencés autour d'un axe de passage dudit passage de circulation pour le serrage d'un tronçon du corps allongé.

Toutefois, le corps allongé est susceptible de porter des équipements, tels que des connecteurs ou des équipements de fond, qui présentent une section transversale dont le diamètre est supérieur à la section transversale moyenne du corps allongé, mais aussi au diamètre du passage de circulation.

Pour tenir compte de cette contrainte, certains tensionneurs sont « ouvrants », comme décrit par exemple dans le brevet FR-2 970 056.

Le tensionneur correspondant comprend un châssis composé de deux demi-cadres qui sont assemblés, par l'intermédiaire de moyens pivots, avec un fourreau pour la fixation du tensionneur à la tour.

Ces moyens pivots sont agencés pour autoriser une manoeuvre en rotation des demi-cadres entre des configurations fermée/ouverte, chacun autour d'un axe de rotation propre.

Mais un tel tensionneur « ouvrant » est susceptible de subir des contraintes et des efforts importants sur ses demi-cadres en position ouverte, susceptibles de compliquer sa fermeture.

Un tensionneur selon le préambule de la revendication 1 est divulgué dans le brevet US 2011/0182671 A1.

### OBJET DE L'INVENTION

L'invention concerne un dispositif de pose du type tensionneur pour le serrage et l'avancement contrôlés d'un corps allongé, notamment d'un câble ou d'un pipeline, ledit dispositif de pose étant destiné à être porté par une tour de pose.

Le dispositif de pose comprend un châssis annulaire qui définit un passage de circulation dudit corps allongé, suivant un axe de passage.

Le châssis annulaire comprend deux parties mobiles de châssis qui comprennent chacune au moins un caisson de guidage agencé autour dudit axe de passage.

Les parties mobiles de châssis sont assemblées avec des moyens pour la solidarisation dudit dispositif de pose avec la tour, par l'intermédiaire de moyens pivots principaux qui autorisent une manoeuvre en rotation desdites parties mobiles de châssis, l'une par rapport à l'autre, entre une configuration fermée de pose et une configuration ouverte d'accès audit passage de circulation.

Et conformément à l'invention, les moyens pivots définissent un axe de rotation principal unique, autour duquel lesdites parties mobiles de châssis sont manoeuvrables en rotation entre lesdites configurations fermée/ouverte.

Une telle structure a notamment pour intérêt d'offrir une ouverture importante, sans contraintes ou efforts sur ses parties mobiles susceptibles de compliquer sa fermeture.

Selon d'autres caractéristiques de réalisation avantageuses, pouvant être prises en combinaison ou indépendamment les unes des autres :
- les deux parties mobiles de châssis sont assemblées l'une avec l'autre, et avec les moyens de solidarisation, par l'intermédiaire des moyens pivots principaux ;
- le châssis annulaire comprend une surface annulaire intérieure et une surface annulaire extérieure, et l'axe de rotation principal s'étend dans l'encombrement défini par lesdites surfaces intérieure et extérieure ;
- les moyens de solidarisation à la tour consistent en au moins une platine qui est solidarisée avec la tour de pose par boulonnage ;
- les parties mobiles de châssis comprennent chacune au moins deux modules qui portent chacun l'un au moins des caissons de guidage, lesquelles modules de chaque partie mobile de châssis sont assemblés en couple par l'intermédiaire de moyens de pivots secondaires qui constituent un axe de rotation secondaire autour duquel l'un desdits modules de châssis est manoeuvrable en rotation par rapport à l'autre desdits modules de châssis ;
- le cas échéant, de préférence, les moyens pivots principaux et secondaires du châssis sont ménagés de sorte que l'axe de rotation principal et les axes de rotation secondaires s'étendent parallèlement les uns aux autres et parallèlement à l'axe de passage ;
- le cas échéant, les moyens pivots principaux, et le cas échéant secondaires, sont associés avec des moyens pour leur verrouillage en rotation ; de préférence, ces moyens de verrouillage en rotation consistent en au moins un vérin de verrouillage manoeuvrable dans une position active au sein d'orifices en regard portés par le châssis.

La présente invention concerne également un système pour la pose d'un corps allongé dans une étendue d'eau, lequel système comprend une structure flottante équipée d'une tour de pose portant au moins un dispositif de pose selon l'invention.

Dans ce cas, la tour de pose comprend avantageusement deux montants latéraux entre lesquels est ménagé un montant central ; et les moyens de solidarisation équipant le dispositif de pose sont solidarisés avec ledit montant central de la tour de pose.

Encore dans ce cas, le système de pose comporte avantageusement des moyens pour le support des parties mobiles de châssis du dispositif de pose lors de leurs manoeuvres entre les configurations fermée/ouverte.

Ces moyens supports comprennent avantageusement :
- deux bras latéraux équipant la tour de pose, de préférence ses montants latéraux, et portant chacun un chemin de glissement, et
- deux organes de glissement équipant chacun l'une des parties mobiles de châssis et coopérant chacun avec l'un desdits chemins de glissement.

Toujours dans ce cas, la tour de pose comporte avantageusement un dispositif de manutention comprenant une poulie haute portée par un bras de manoeuvre, de sorte à permettre un dégagement d'une charge supportée par ladite poulie haute par rapport à l'axe de passage.

### DESCRIPTION DETAILLEE D'UN EXEMPLE DE REALISATION

La présente invention sera encore illustrée, sans être aucunement limitée, par la description suivante d'un mode de réalisation particulier en relation avec les figures annexées, dans lesquelles :
- la figure 1 est une vue de côté d'une tour qui est destinée à équiper une structure flottante et qui porte deux dispositifs de pose du type tensionneur ;
- la figure 2 est une vue partielle et agrandie, en perspective, de l'un des dispositifs de pose représentés sur la figure 1, en configuration fermée ;
- la figure 3 est une vue de dessus de l'un des dispositifs de pose représentés sur la figure 1, en configuration fermée, avec la tour illustrée schématiquement ;
- la figure 4 représente le dispositif de pose selon la figure 2, dans laquelle les deux parties mobiles de châssis sont pivotées autour de l'axe de rotation principal jusqu'à la configuration ouverte ;
- les figures 5 et 6 illustrent le dispositif de pose selon la figure 4, selon une perspective du côté distal (côté ouverture) et selon une perspective du côté proximal (côté axe de rotation principal), respectivement ;
- la figure 7 représente encore le dispositif de pose selon la figure 2, dans laquelle le module distal de chacune des deux parties de châssis en configuration ouverte est manoeuvré en pivotement par rapport au module proximal associé, autour de leurs axes de rotation secondaires respectifs.

Le dispositif de pose 1 selon l'invention, désigné encore « dispositif tensionneur » ou tout simplement « tensionneur », est destiné à équiper un système (ou une installation) pour la pose d'un corps allongé C dans une étendue d'eau (en particulier sur les fonds océaniques).

Le corps allongé C consiste avantageusement en un câble, en un conduit flexible, par exemple un pipeline ou un ombilical, ou encore en une conduite rigide déroulée.

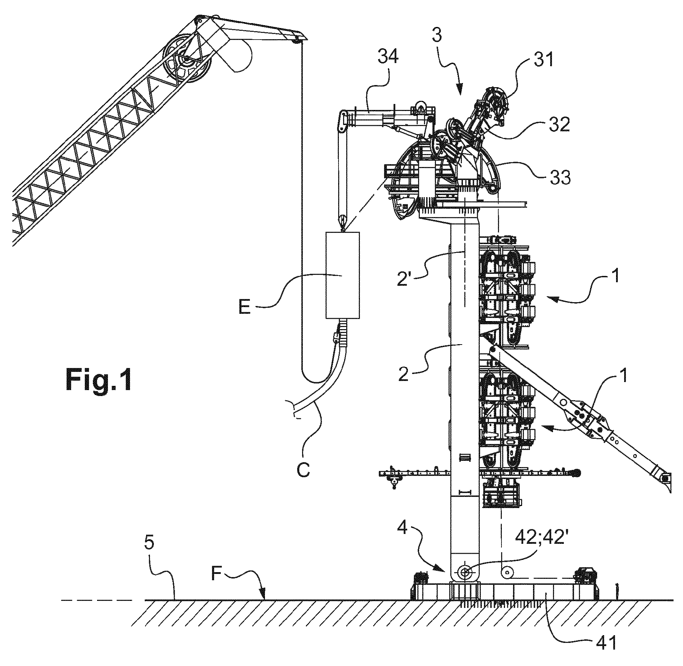

Tel que représenté sur la figure 1, le système pour la pose du corps allongé C comprend une structure flottante F portant une tour de pose 2 qui porte elle-même un ou plusieurs dispositif tensionneur 1 selon l'invention.

La structure flottante consiste par exemple en un navire ou une plateforme off-shore.

Cette structure flottante est apte à flotter sur une étendue d'eau, par exemple une mer, un océan ou un lac.

La tour de pose 2, définissant un axe longitudinal 2' et représentée sur la figure 1, porte :
- deux dispositifs de pose 1 selon l'invention, superposés coaxialement l'un par rapport à l'autre,
- des moyens de manutention 3, ménagés du côté de son extrémité supérieure (à distance de la structure flottante F), et
- des moyens de solidarisation 4 de cette tour 2 avec un pont 5 de la structure flottante F, ménagés du côté de son extrémité inférieure.

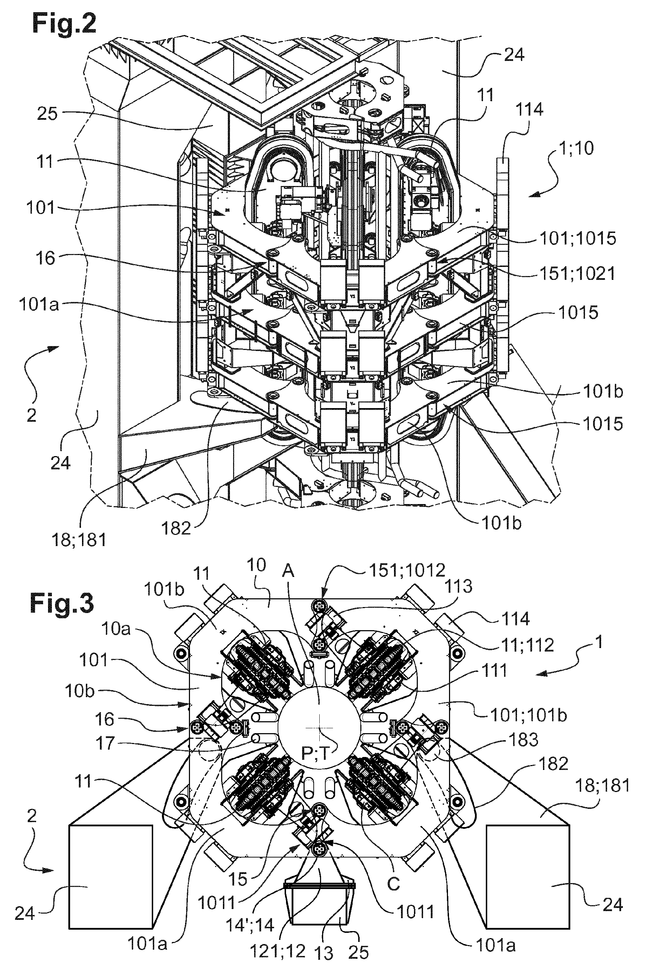

En l'espèce, cette tour de pose 2 comprend deux montants latéraux 24, à distance l'un de l'autre, entre lesquels est ménagé un montant central 25 (figures 2 et 3).

Les différents montants 24, 25 s'étendent parallèlement et à distance les uns des autres.

De manière alternative, le montant central 25 pourrait être remplacé par des traverses horizontales qui s'étendent entre les deux montants latéraux 24 et qui reçoivent les dispositifs de pose 1.

Les moyens de manutention 3, portés par la tour de pose 2, comportent :
- une poulie haute 31 (« top sheave ») montée en porte-à-faux à l'extrémité d'un bras de manoeuvre 32, définissant un axe de pose vertical T,
- une goulotte 33 sensiblement en forme de U, dont la convexité est tournée vers le haut, définissant un rayon de courbure adéquat pour le corps allongé C, et
- un grue de manoeuvre 34 dont la fonction est notamment de manoeuvrer un équipement E porté par le corps allongé C au-dessus de la goulotte 33.

Les moyens de solidarisation 4 comprennent une embase 41 destinée à être solidarisée avec le pont 5 de la structure flottante F.

Entre cette embase 41 et la tour de pose 2, les moyens de solidarisation 4 comprennent ici des moyens de liaison pivot 42 qui autorisent une rotation de la tour de pose 2 autour d'un axe horizontal 42' perpendiculaire à son axe longitudinal 2'.

L'un des dispositifs tensionneurs 1 est illustré plus en détails sur les figures 2 à 7.

Chaque dispositif tensionneur 1 est apte à assurer, de manière classique en soi, une prise en charge par serrage d'un tronçon du corps allongé C, et l'avancement piloté de ce dernier, pour permettre sa dépose d'une manière contrôlée sur une surface de réception constituée par exemple par un fond océanique.

Pour cela, le dispositif tensionneur 1 comprend un châssis 10 annulaire portant des caissons de guidage 11 pour le serrage d'un tronçon du corps allongé C lors de sa pose.

Le châssis annulaire 10, consistant en une structure mécano-soudée, comporte :
- une surface annulaire intérieure 10a, définissant un passage A pour la circulation du corps allongé C, suivant un axe de passage P (dit encore « axe de tir » ou « firing line »), et
- une surface annulaire extérieure 10b.

Selon la méthode de pose mise en oeuvre, le dispositif tensionneur 1 est positionné de sorte que son axe de passage P soit orienté (i) verticalement ou sensiblement verticalement comme illustré sur la figure 1, ou (ii) horizontalement ou sensiblement horizontalement.

Les caissons de guidage 11, ici au nombre de quatre, sont répartis autour de l'axe de passage P.

En fonction de la conception du dispositif tensionneur 1, les caissons de guidage 11 peuvent également être par exemple au nombre de deux, trois, cinq ou six, régulièrement répartis autour de l'axe de passage P.

De manière classique en soi, chaque caisson de guidage 11 comprend un corps support 111 sur lequel est guidée en translation une chaîne périphérique de guidage 112 entraînée par une motorisation 113.

Un brin avant de la chaîne périphérique de guidage 112 s'étend parallèlement à l'axe de passage P, pour constituer la surface de contact avec un tronçon du corps allongé C à déposer.

Le corps support 111 de chaque caisson de guidage 11 peut être associé au châssis 10 par l'intermédiaire de moyens de manoeuvre 114 qui assurent un pilotage en translation de ce caisson 11 parallèlement à lui-même, et selon une direction perpendiculaire à l'axe de passage P.

Les moyens de manoeuvre 114 consistent par exemple en des actionneurs linéaires, par exemple du type vérin électrique ou du type vérin hydraulique.

En pratique, comme illustré sur la figure 1, le corps allongé C peut être amené à porter des équipements rapportés E, tels que des connecteurs ou des équipements de fond.

De tels équipements E présentent classiquement une section transversale dont le diamètre est supérieur par rapport à la section transversale moyenne du corps allongé C (et par conséquent du passage A).

Dans ce cadre, et conformément à l'invention, le châssis 10 se compose de deux parties mobiles de châssis 101 sur lesquelles sont répartis les caissons de guidage 11.

Les deux parties mobiles de châssis 101 sont ici identiques, ou au moins approximativement identiques, l'une par rapport à l'autre.

Elles forment une sorte de mâchoire, chacune en forme générale de C, qui portent ici chacune deux caissons de guidage 11.

Chaque partie mobile de châssis 101 est délimitée par deux extrémités :
- une extrémité proximale 1011, située du côté de la tour de pose 2, et
- une extrémité distale 1012, située à distance de la tour de pose 2.

Chaque partie mobile de châssis 101 est ici constituée de plusieurs étages de châssis 1015, ici au nombre de trois, superposés et à distance les uns des autres (visibles figures 2, 5 et 6).

Ces étages de châssis 1015 sont avantageusement solidarisés ensemble par le biais de structures formant entretoises.

Ces deux parties mobiles de châssis 101 sont assemblées, au niveau de leurs extrémités proximales 1011 attenantes, par le biais de moyens de liaison principaux 12.

Les moyens de liaison principaux 12 sont adaptés, d'une part, à la solidarisation du dispositif tensionneur 1 avec la tour de pose 2 et, d'autre part, à autoriser une manoeuvre en rotation des parties mobiles de châssis 101, l'une par rapport à l'autre, selon un unique axe de rotation parallèle à l'axe de passage P.

En l'espèce, les parties mobiles de châssis 101 sont mobiles entre deux configurations :
- une configuration fermée (figures 2 et 3) dans laquelle les extrémités distales 1012 des parties mobiles de châssis 101 sont attenantes et solidarisées l'une avec l'autre, les caissons de guidage 11 étant alors aptes à venir serrer un tronçon du corps allongé C lors de sa pose, et
- une configuration ouverte (figures 3 à 7) dans laquelle les extrémités distales 1012 des parties mobiles de châssis 101 sont écartées l'une de l'autre, pour définir un accès latéral B au passage de circulation A.

A cet effet, les moyens de liaison principaux 12 comprennent au moins une structure 121 en forme de chape dont :
- une première extrémité est munie de moyens 13 pour la solidarisation du dispositif tensionneur 1 avec la tour de pose 2, et
- une seconde extrémité est munie de moyens pivots principaux 14 qui permettent une manoeuvre en rotation des deux parties mobiles de châssis 101, l'une par rapport à l'autre, entre les configurations fermée/ouverte.

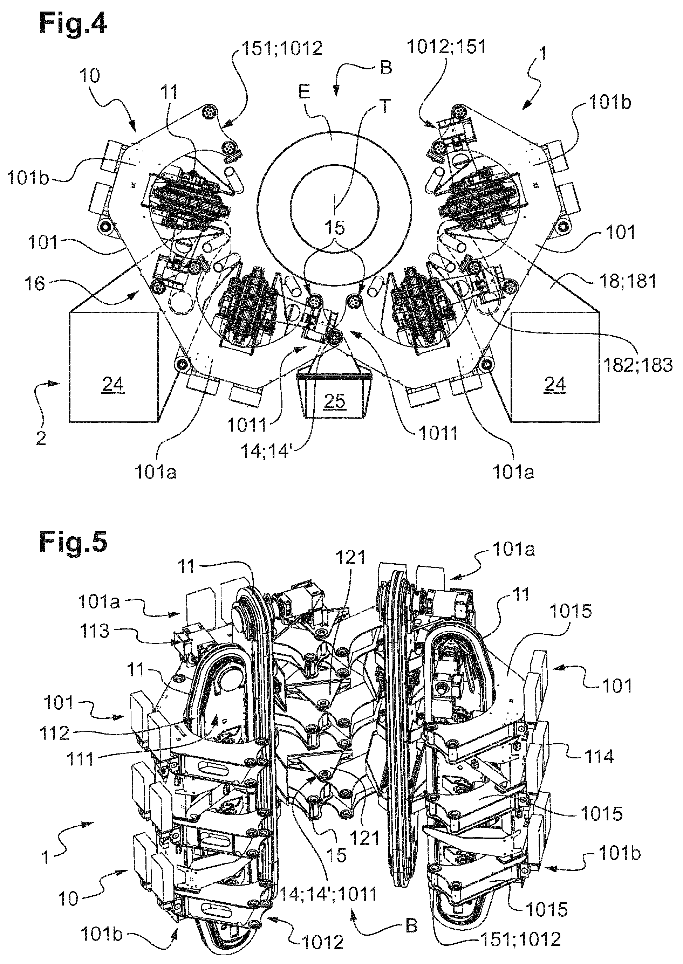

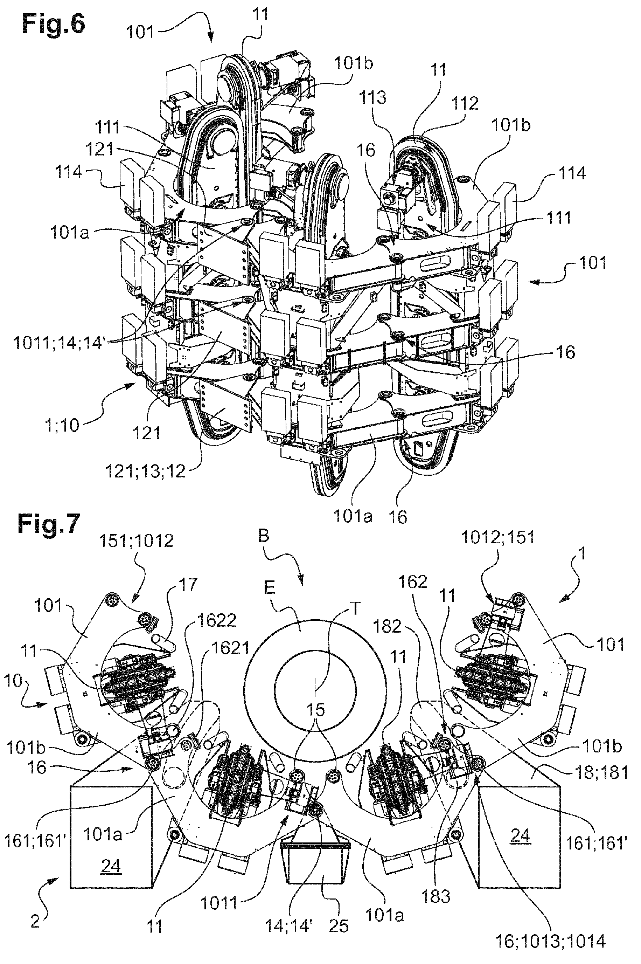

En l'espèce, les moyens de liaison principaux 12 comprennent plusieurs structures 121 en forme de chape, ici au nombre de trois, superposées et à distance les unes par rapport aux autres (figures 5 et 6).

Chaque structure 121 en forme de chape est ici associée directement à une paire d'étages 1015 des parties mobiles de châssis 101.

Les moyens de solidarisation 13 consistent par exemple en une platine qui est destinée à être solidarisée par boulonnage avec l'une des faces de la tour de pose 2, en particulier son montant central 25.

Les extrémités proximales 1011 des deux parties mobiles de châssis 101 sont assemblées l'une avec l'autre, et avec les moyens de solidarisation 13, par l'intermédiaire des moyens pivots principaux 14.

Les moyens pivots principaux 14 consistent par exemple en un tourillon coopérant avec les extrémités proximales 1011 des deux parties mobiles de châssis 101.

Ces moyens pivots principaux 14 constituent un axe de rotation principal 14' s'étendant parallèlement à l'axe de passage P.

L'axe de rotation principal 14' s'étend ainsi dans l'encombrement défini par les surfaces intérieure 10a et extérieure 10b du châssis annulaire 10, du côté de la surface annulaire extérieure 10b.

Les moyens de liaison principaux 12 comprennent encore des moyens 15 pour le verrouillage en rotation des parties de châssis 101 autour de l'axe de rotation principal 14'.

Les moyens de verrouillage 15 consistent, par exemple, en au moins un vérin de verrouillage associé à une broche manoeuvrable dans une position active au sein d'orifices complémentaires venant en correspondance.

Les moyens de verrouillage 15 sont ménagés ici dans l'encombrement défini par les surfaces intérieure 10a et extérieure 10b du châssis annulaire 10, du côté de la surface annulaire intérieure 10a.

Pour participer à ce verrouillage en rotation, les extrémités distales 1012 des parties mobiles de châssis 101 comportent des moyens de verrouillage complémentaires 151.

Les moyens de verrouillage complémentaires 151 consistent, par exemple, en au moins un vérin de verrouillage associé à une broche manoeuvrable dans une position active au sein d'orifices complémentaires venant en correspondance.

Comme illustré sur la figure 7, chaque partie de châssis 101 se compose elle-même de plusieurs modules 101a, 101b qui portent chacun l'un des caissons de guidage 11.

En l'espèce, chaque partie de châssis 101 comprend deux modules identiques, ou au moins approximativement identiques, à savoir :
- un module proximal 101a, dont une première extrémité (correspondant à l'extrémité proximale 1011) est assemblée avec la tour de pose 2 par l'intermédiaire des moyens de liaison principaux 12, et
- un module distal 101 b, assemblé avec le module proximal 101a par l'intermédiaire de moyens de liaison secondaires 16.

En l'espèce, une première extrémité latérale 1013 du module distal 101b est assemblée avec une seconde extrémité latérale 1014 du module proximal 101a par l'intermédiaire des moyens de liaison secondaires 16. Et une seconde extrémité latérale de ce module distal 101b forme l'extrémité latérale distale 1012 de la partie mobile de châssis 101.

Les moyens de liaison secondaires 16 comprennent :
- des moyens pivots secondaires 161, ménagés du côté de la surface annulaire extérieure 10b, constituant un axe de rotation secondaire 161', et
- des moyens 162 pour le verrouillage en rotation desdits moyens pivots secondaires 161 dans la configuration fermée.

Ces moyens de liaison secondaires 16 sont ici redondants sur chacun des étages 1015 des parties mobiles 101.

Les extrémités attenantes du couple (ou de la paire) de modules 101a, 101b sont assemblées l'une avec l'autre par l'intermédiaire des moyens pivots secondaires 161.

Les moyens pivots secondaires 161 consistent par exemple en un tourillon coopérant avec les extrémités attenantes du couple de modules 101 a, 101b.

Ces moyens pivots secondaires 161 permettent une manoeuvre en rotation du module distal 101b par rapport au module proximal 101a.

Les moyens pivots secondaires 161 sont ménagés de sorte que leurs axes de rotation secondaires 161' respectifs et que l'axe de rotation principal 14' s'étendent parallèlement les uns aux autres (en l'espèce verticalement ou au moins approximativement verticalement).

Les moyens de verrouillage en rotation 162 des moyens de liaison secondaires 16 consistent quant à eux, par exemple, en au moins un vérin de verrouillage 1621 associé à un organe de clavetage manoeuvrable dans une position active au sein d'orifices complémentaires 1622 agencés en correspondances (figure 7).

Chaque module 101a, 101 b du châssis 10 est encore équipé de deux organes amortisseurs 17 (« bumpers ») qui sont portés par le caisson de guidage 11 associé et qui sont ménagés de part et d'autre de sa chaîne 112.

De leur côté, les montants latéraux 24 comportent des moyens 18 pour le support des parties de châssis 101 du dispositif tensionneur 1 lors de leur manoeuvre entre les configurations fermée (figures 2 et 3) et ouverte (figures 4 à 7).

Ces moyens supports 18 comprennent :
- deux bras latéraux 181 s'étendant chacun depuis l'un des montants latéraux 24, sur lequel est ménagé un chemin de glissement 182 consistant par exemple en une surface inox, et
- deux organes de glissement 183, par exemple chacun en forme d'un patin réalisé en bronze, qui équipent chacun la face inférieure de l'une des parties de châssis 101 (en particulier la face inférieure du module proximal 101a) et qui sont adaptés chacun à cheminer le long de l'un des chemins de glissement 182.

En particulier, les deux bras latéraux 181 consistent chacun en des bras en porte-à-faux, sous-jacent de la surface inférieure de chacune des parties de châssis 101 (en particulier la face inférieure du module proximal 101a).

De manière générale, le châssis 10 est associé à un ensemble de moyens de manoeuvre (non représentés) pour le déplacement des parties de châssis 101 et/ou des modules 101a, 101 b autour de leurs axes de rotation 14', 161' respectifs.

Ces moyens de manoeuvre (non représentés) consistent par exemple en des actionneurs, par exemple des vérins électriques ou en des vérins hydrauliques.

En fonctionnement, dans la configuration fermée (figures 2 et 3), les deux parties de châssis 101 forment un châssis 10 annulaire définissant le passage A pour le corps allongé C.

Dans cette configuration, la poulie haute 31 (portée par le bras de manoeuvre 32) est disposée de sorte que l'axe de pose vertical T s'étende coaxialement à l'axe de passage P.

Les caissons de guidage 11 sont agencés autour de l'axe de passage P pour le serrage d'un tronçon du corps allongé C s'étendant dans le passage A, et pour assurer son avancement contrôlé.

Les deux parties de guidage 101 sont maintenues dans cette configuration fermée par l'activation des différents moyens de verrouillage, pour rappel :
- les moyens de verrouillage 15 équipant les moyens de liaison principaux 12,
- les moyens de verrouillage 162 équipant les moyens de liaison secondaires 16, et
- les moyens de verrouillage complémentaires 151 ménagés au niveau des extrémités distales 1012 des parties de châssis 101.

Si besoin est, par exemple pour le passage d'objets E de grande section le long de l'axe de passage P (par exemple un connecteur), le dispositif tensionneur 1 peut être manoeuvré dans sa configuration ouverte (figures 4 à 7).

Pour obtenir cette configuration, les deux parties de châssis 101 sont écartées l'une de l'autre par une manoeuvre en rotation autour de l'axe de rotation principal 14' défini par les moyens pivots principaux 14.

Pour cela, chaque partie mobile de châssis 101 est manoeuvrée dans un sens de rotation qui est inverse au sens de rotation de l'autre partie mobile de châssis 101 (sur la figure 4, dans un sens anti-horaire pour la partie mobile de châssis 101 située à gauche et dans un sens horaire pour la partie de châssis 101 située à droite).

Les extrémités distales 1012 des parties mobiles de châssis 101 sont ainsi écartées l'une de l'autre, délimitant l'accès longitudinal B.

Pour autoriser cette manoeuvre en configuration ouverte, certains des moyens de verrouillage du châssis 10 sont préalablement désactivés, à savoir :
- les moyens de verrouillage 15 équipant les moyens de liaison principaux 12, et
- les moyens de verrouillage complémentaires 151 ménagés au niveau des extrémités distales 1012 des parties mobiles de châssis 101.

Les moyens de verrouillage 162 des moyens de liaison secondaires 16 sont avantageusement maintenus en position activée.

La manoeuvre en configuration ouverte est assistée par les moyens supports 18 associés aux montants latéraux 24.

En particulier, chaque organe de glissement 183 chemine le long de son chemin de glissement 182 associé, cela selon une trajectoire circulaire centrée sur l'axe de rotation principal 14'.

Dans le cas où un accès latéral B d'une largeur accrue est recherché, il est ici possible de manoeuvrer les modules distaux 101 b en pivotement par rapport à leurs modules proximaux 101a associés, de sorte à les écarter encore l'un de l'autre.

Cette manoeuvre s'effectue par un mouvement en rotation de chaque module distal 101 b autour de l'axe de rotation secondaire 161' défini par les moyens pivots secondaires 161.

Ce déplacement est rendu possible par l'inactivation préalable des moyens de verrouillage 162 équipant les moyens de liaison secondaires 16 respectifs.

Pour faciliter ce passage de l'objet E, le bras de manoeuvre 32 peut également être piloté de manière à être pivoté et à être allongé, de sorte à écarter la poulie haute 31 (et son axe de pose T) par rapport à la tour de pose 2 et à l'axe de passage P (figures 4 et 7).

Une fois le passage effectué, les moyens de manoeuvre du châssis 10 peuvent être pilotés de sorte à revenir en configuration fermée, puis les moyens de verrouillage 15, 162, 151 sont réactivés.

De manière générale, chaque partie mobile de châssis 101 peut comporter plus de deux modules (par exemple trois) agencés en série les uns à la suite des autres. Chacun de ces modules comporte au moins un caisson de guidage.

Ces modules sont assemblés deux à deux (en couple) au niveau de leurs extrémités attenantes, par l'intermédiaire de moyens de liaison secondaire 16 (en particulier de moyens pivots secondaires 161).

Les modules de chaque couple sont aptes à pivoter l'un par rapport à l'autre autour d'un axe de rotation secondaire 161'. '.

## Revendications

1. Dispositif de pose du type tensionneur pour le serrage et l'avancement contrôlés d'un corps allongé (C), ledit dispositif de pose (1) étant destiné à être porté par une tour de pose (2),
lequel dispositif de pose (1) comprend un châssis (10) annulaire qui définit un passage (A) pour la circulation dudit corps allongé (C), suivant un axe de passage (P),
lequel châssis annulaire (10) comprend deux parties mobiles de châssis (101) qui comprennent chacune au moins un caisson de guidage (11) agencé autour dudit axe de passage (P),
lesquelles deux parties mobiles de châssis (101) sont assemblées avec des moyens (13) pour la solidarisation dudit dispositif de pose (1) avec ladite tour (2), par l'intermédiaire de moyens pivots principaux (14) qui autorisent une manoeuvre en rotation desdites parties mobiles de châssis (101), l'une par rapport à l'autre, entre une configuration fermée de pose et une configuration ouverte d'accès audit passage de circulation (A),
**caractérisé en ce que** lesdits moyens pivots principaux (14) définissent un unique axe de rotation principal (14') autour duquel lesdites parties mobiles de châssis (101) sont manoeuvrables en rotation entre lesdites configurations fermée/ouverte.

2. Dispositif de pose selon la revendication 1, **caractérisé en ce que** les deux parties mobiles de châssis (101) sont assemblées l'une avec l'autre, et avec les moyens de solidarisation (13), par l'intermédiaire des moyens pivots principaux (14).

3. Dispositif de pose selon l'une quelconque des revendications 1 ou 2, **caractérisé en ce que** le châssis annulaire (10) comprend une surface annulaire intérieure (10a) et une surface annulaire extérieure (10b), et **en ce que** l'axe de rotation principal (14') s'étend dans l'encombrement défini par lesdites surfaces (10a, 10b).

4. Dispositif de pose selon l'une quelconque des revendications 1 à 3, **caractérisé en ce que** les parties mobiles de châssis (101) comprennent chacune au moins deux modules (101a, 101b) qui portent chacun l'un au moins des caissons de guidage (11),
et **en ce que** les modules (101a, 101 b) de chaque partie mobile de châssis (101) sont assemblés en couple par l'intermédiaire de moyens pivots secondaires (161) qui constituent un axe de rotation secondaire (161') autour duquel l'un desdits modules (101b) est manoeuvrable en rotation par rapport à l'autre desdits modules (101a).

5. Dispositif de pose selon la revendication 4, **caractérisé en ce que** les moyens pivots principaux (14) et secondaires (161) du châssis (10) sont ménagés de sorte que l'axe de rotation principal (14') et les axes de rotation secondaires (161') s'étendent parallèlement les uns aux autres.

6. Dispositif de pose selon l'une quelconque des revendications 1 à 5, **caractérisé en ce que** les moyens pivots principaux (14) du châssis (10), et le cas échéant les moyens pivots secondaires (161), sont associés avec des moyens (15, 162, 151) pour leur verrouillage en rotation.

7. Système pour la pose d'un corps allongé (C) dans une étendue d'eau, lequel système de pose comprend une structure de pose flottante équipée d'une tour de pose (2) portant au moins un dispositif de pose (1) selon l'une quelconque des revendications 1 à 6.

8. Système de pose selon la revendication 7, **caractérisé en ce que** la tour de pose (2) comporte un dispositif de manutention (3) comprenant une poulie haute (31), portée par un bras de manoeuvre (32), de sorte à permettre un dégagement de l'axe de pose (T) par rapport à l'axe de passage (P).

9. Système de pose selon l'une quelconque des revendications 7 ou 8, **caractérisé en ce que** la tour de pose (2) comprend deux montants latéraux (24) entre lesquels est ménagé un montant central (25), et **en ce que** les moyens de solidarisation (13) équipant le dispositif de pose (1) sont solidarisés avec ledit montant central (25) de la tour de pose (2).

10. Système de pose selon l'une quelconque des revendications 7 à 9, **caractérisé en ce qu'**il comporte des moyens (18) pour le support des parties mobiles de châssis (101) du dispositif de pose (1) lors de leurs manoeuvres entre les configurations fermée/ouverte.

11. Système de pose selon la revendication 10, **caractérisé en ce que** les moyens supports (18) comprennent :
- deux bras latéraux (181) équipant la tour de pose (2), de préférence ses montants latéraux (24), et portant chacun un chemin de glissement (182), et
- deux organes de glissement (183) équipant chacun l'une des parties mobiles de châssis (101) et coopérant chacun avec l'un desdits chemins de glissement (182).

## Patentansprüche

1. Auslegevorrichtung vom Typ Spannvorrichtung zum kontrollierten Einspannen und Vorschieben eines länglichen Körpers (C), wobei die Auslegevorrichtung (1) dazu bestimmt ist, von einem Auslegeturm (2) getragen zu werden,
wobei die Auslegevorrichtung (1) ein ringförmiges Chassis (10) aufweist, das einen Durchgang (A) zum Bewegen des länglichen Körpers (C) entlang einer Durchgangsachse (P) definiert,
wobei das ringförmige Chassis (10) zwei bewegliche Chassisteile (101) aufweist, von denen jedes wenigstens einen um die Durchgangsachse (P) herum angeordneten Führungskanten (11) aufweist,
wobei die beweglichen Chassisteile (101) mit Mitteln (13) für den Zusammenbau der Auslegevorrichtung (1) mit dem besagten Turm (2) mittels Hauptschwenkmitteln (14), die eine Drehbewegung der beweglichen Chassisteile (101) zueinander zwischen einer geschlossenen Auslegeposition und einer offenen Konfiguration des Zugangs zum Bewegungsdurchgang (A) ermöglichen, zusammengebaut sind,
**dadurch gekennzeichnet, daß** die Hauptschwenkmittel (14) eine einzige Hauptdrehachse (14') definieren, um die die beweglichen Chassisteile (101) zwischen der geschlossenen und der offenen Konfiguration durch Drehen betätigbar sind.

2. Auslegevorrichtung gemäß Anspruch 1, **dadurch gekennzeichnet, daß** die beiden beweglichen Chassisteile (101) mittels der Hautschwenkmittel (14) miteinander und mit den Zusammenbaumitteln (13) zusammengebaut sind.

3. Auslegevorrichtung gemäß einem der Ansprüche 1 oder 2, **dadurch gekennzeichnet, daß** das ringförmige Chassis (10) eine innere ringförmige Oberfläche (10a) und eine äußere ringförmige Oberfläche (10b) aufweist und daß sich die Hauptdrehachse (14') in dem von den beiden Oberfächen (10a, 10b) definierten Raum erstreckt.

4. Auslegevorrichtung gemäß einem der Ansprüche 1 bis 3, **dadurch gekennzeichnet, daß** die beweglichen Chassisteile (101) jeweils wenigstens zwei Module (101a, 101b) aufweisen, von denen jedes wenigstens einen der Führungskästen (11) trägt,
und daß die Module (101a, 101b) jedes beweglichen Chassisteils (101) paarweise mittels sekundärer Drehmittel (161) zusammengebaut sind, die eine sekundäre Drehachse (161') bilden, um die eins der Module (101b) durch Drehung gegenüber den anderen der Module (101a) betätigbar ist.

5. Auslegevorrichtung gemäß Anspruch 4, **dadurch gekennzeichnet, daß** die Hauptschwenkmittel (14) und die sekundären Schwenkmittel (161) des Chassis (10) derart angeordnet sind, daß sich die Hauptdrehachse (14') und die sekundären Drehachsen (161') parallel zueinander erstrecken.

6. Auslegevorrichtung gemäß einem der Ansprüche 1 bis 5, **dadurch gekennzeichnet, daß** die Hauptschwenkmittel (14) des Chassis (10) und gegebenenfalls die sekundären Schwenkmittel (161) Mitteln (15, 162, 151) für deren drehfeste Versiegelung zugeordnet sind.

7. System zum Auslegen eines länglichen Körpers (C) in einem Gewässer, wobei das Auslegesystem eine schwimmende Auslegestruktur aufweist, die mit einem Auslegeturm (2) ausgestattet ist, der wenigstens eine Auslegevorrichtung (1) gemäß einem der Ansprüche 1 bis 6 trägt.

8. Auslegesystem gemäß Anspruch 7, **dadurch gekennzeichnet, daß** der Auslegeturm (2) eine Betätigungsvorrichtung (3) aufweist, die einen von einem Betätigungsarm (32) getragenen oberen Flaschenzug (31) aufweist, um eine Freisetzung der Auslegeachse (T) gegenüber der Durchgangsachse (P) zu ermöglichen.

9. Auslegesystem gemäß einem der Ansprüche 7 oder 8, **dadurch gekennzeichnet, daß** der Auslegeturm (2) zwei seitliche Stützen (24) aufweist, zwischen denen eine zentrale Stütze (25) angeordnet ist, und daß die Zusammenbaumittel (13), mit denen die Auslegevorrichtung (1) ausgestattet ist, mit der zentralen Stütze (25) des Auslegeturms (2) fest verbunden sind.

10. Auslegesystem gemäß einem der Ansprüche 7 bis 9, **dadurch gekennzeichnet, daß** es Mittel (18) zum Abstützen der beweglichen Chassisteile (101) der Auslegevorrichtung (1) während deren Bewegungen zwischen der geschlossenen und der offenen Konfiguration aufweist.

11. Auslegesystem gemäß Anspruch 10, **dadurch gekennzeichnet, daß** die Abstützungsmittel (18)
- zwei seitliche Arme (181), mit denen der Auslegeturm (2), vorzugsweise dessen seitliche Stützen (24), ausgestattet sind und von denen jeder eine Gleitpiste (182) aufweist, und
- zwei Gleitorgane (183), von denen jedes eins der beweglichen Chassisteile (101) ausstattet und mit einer der Gleitpisten (182) zusammenwirkt,
aufweisen.

## Claims

1. A laying device of the tensioner type for the controlled clamping and moving of an elongated body (C), said laying device (1) being intended to be carried by a laying tower (2),
which laying device (1) comprises an annular frame (10) that defines a passage (A) for the circulation of said elongated body (C), according a passage axis (P),
which annular frame (10) comprises two mobile frame parts (101) that each comprise at least one guiding box (11) arranged about said passage axis (P),
which two mobile frame parts (101) are assembled to means (13) for the fastening of said laying device (1) to said tower (2), through main pivot means (14) that allow a rotational operation of said mobile frame parts (101), relative to each other, between a closed configuration for laying and an open configuration for access to said passage of circulation (A),
**characterized in that** said main pivot means (14) define a single main rotation axis (14') about which said mobile frame parts (101) are rotationally operable between said closed / open configurations.

2. The laying device according to claim 1, **characterized in that** the two mobile frame parts (101) are assembled to each other, and to the fastening means (13), through main pivot means (14).

3. The laying device according to any one of claims 1 or 2, **characterized in that** the annular frame (10) comprises an inner annular surface (10a) and an outer annular surface (10b), and **in that** the main rotation axis (14') extends within the space defined by said surfaces (10a, 10b).

4. The laying device according to any one of claims 1 to 3, **characterized in that** the mobile frame parts (101) each comprise at least two modules (101a, 101b) that each carry one at least of the guiding boxes (11),
and **in that** the modules (101a, 101b) of each mobile frame part (101) are assembled to each other by couple through secondary pivot means (161) that constitute a secondary rotation axis (161') about which one of said modules (101b) is rotationally operable with respect to the other of said modules (101a).

5. The laying device according to claim 4, **characterized in that** the main (14) and secondary (161) pivot means of the frame (10) are arranged so that the main rotation axis (14') and the secondary rotation axes (161') extend parallel to each other.

6. The laying device according to any one of claims 1 to 5, **characterized in that** the main pivot means (14) of the frame (10), and, as the case may be, the secondary pivot means (161), are associated with means (15, 162, 151) for their locking in rotation.

7. A system for laying an elongated body (C) in a water area, which laying system comprises a laying structure of floating type equipped with a laying tower (2) carrying at least one laying device (1) according to any one of claims 1 to 6.

8. The laying system according to claim 7, **characterized in that** the laying tower (2) includes a handling device (3) comprising a top sheave (31) carried by an operating arm (32), so as to allow a disengagement of the laying axis (T) with respect to the passage axis (P).

9. The laying system according to any one of claims 7 or 8, **characterized in that** the laying tower (2) comprises two lateral struts (24) between which is arranged a central strut (25), and **in that** the fastening means (13) equipping the laying device (1) are fastened to said central strut (25) of the laying tower (2).

10. The laying system according to any one of claims 7 to 9, **characterized in that** it includes means (18) for supporting the mobile frame parts (101) of the laying device (1) during their operations between the closed / open configurations.

11. The laying system according to claim 10, **characterized in that** the support means (18) comprise:
- two lateral arms (181) equipping the laying tower (2), preferably the lateral struts (24) thereof, and each carrying a sliding path (182), and
- two sliding members (183) each equipping one of the mobile frame parts (101) and each cooperating with one of said sliding paths (182).
